# EUROPEAN PATENT APPLICATION

(11) **EP 2 066 007 A2**
(43) Date of publication of application: **03.06.2009**
(21) Application number: 08020650.1
(22) Date of filing: 27.11.2008
(51) Int. Cl.: H02K 3/51

(54) **Rotary electric machine**

(30) Priority: 29.11.2007 JP 2007308900
(71) Applicant: Hitachi Ltd., Chiyoda-ku Tokyo (JP)
(72) Inventor: Tanaka, Takayasu, Tokyo 100-8220 (JP); Murayama, Hirohide, Tokyo 100-8220 (JP); Hattori, Kenichi, Tokyo 100-8220 (JP); Takahashi, Kazuhiko, Tokyo 100-8220 (JP)
(74) Representative: Borchert, Uwe Rudolf

(57) **Abstract**

In a rotary electric machine, for ensuring a cooling air flow between a rotor iron core and a stator iron core without enlarging a rotor, a separation preventing device (18 to 20 and 25 to 27) is provided at a position between adjacent slots (8) so as to correspond to each other at a shrink-fitting position where a retaining ring (13) is shrink-fitted to a rotor iron core (6). Since a separation preventing position of the retaining ring (13) is located at the shrink-fitting position, it is possible to reduce a length of the retaining ring itself so as not to be adjacent to the end portion of the stator iron core (16). Accordingly, a gap between the rotor iron core (6) and the stator iron core (16) does not reduce. As a result, it is possible to ensure a cooling air flow between the rotor iron core (6) and the stator iron core (16) without enlarging the rotor (3).

## Description

The present invention relates to a rotary electric machine such as a steam turbine generator and a gas turbine generator, and more particularly, to a rotary electric machine in which a retaining ring retains a rotor coil end portion protruding from a rotor iron core.

In general, since a turbine generator rotates at high speed, a large centrifugal force acts on a rotor coil end portion protruding from a rotor iron core in an axial direction. Therefore, in order to prevent the rotor coil end portion from being deformed by the large centrifugal force acting thereon, a high-tension steel retaining ring retains the rotor coil end portion in such a manner that the outer peripheral portion is shrink-fitted to the axial end portion of the rotor iron core.

However, the retaining ring shrink-fitted to the end portion of the rotor iron core is enlarged in diameter by a centrifugal force acting on the rotor coil end portion or a centrifugal force acting on the retaining ring itself at high-speed rotation, thereby reducing a fixing force between the retaining ring and the rotor iron core which are shrink-fitted to each other. As a result, when an axial thermal expansion is caused by a heat generated upon supplying current to the rotor coil for an operation thereof, a problem may arise in that the retaining ring having reduced fixing force is separated from the rotor iron core.

In order to prevent the retaining ring from separating from the end portion of the rotor iron core during the operation, JP-A-59-103533 discloses a technique in which a separation preventing key of a retaining ring is mounted between a retaining ring and a rotor coil end portion.

It is possible to prevent the separation of the retaining ring by the use of the retainin disclosed in JP-A-59-103533, g ring separation preventing key However, since the separation preventing key for preventing the separation is mounted between the rotor iron core and the retaining ring to a position where the retaining ring more extends to the center portion of the rotor iron core in an axial direction than the shrink-fitting position where the retaining ring is shrink-fitted to the end portion of the rotor iron core, the extending end portion of the retaining ring having a diameter larger than the outer diameter of the rotor iron core is adjacent to the stator iron core.

As a result, a gap between the end portion of the retaining ring and the end portion of the stator iron core becomes narrow, thereby limiting a cooling air flow supplied to a gap between the rotor iron core and the stator iron core.

Therefore, in order to widen a gap between the end portion of the retaining ring and the end portion of the stator iron core, it may be supposed that the extending end portion of the retaining ring is inclined. However, when the inclined portion is provided, a thickness of the extending end portion of the retaining ring becomes smaller. As a result, since stress is concentrated in the vicinity of a key groove for the separation preventing key provided in the retaining ring, a problem may arise in that a portion in the vicinity of the key groove is broken.

Meanwhile, in order to widen a gap between the end portion of the retaining ring and the end portion of the stator iron core, it may be supposed that an axial length of the rotor iron core is more enlarged than that of the stator iron core so that the extending end portion of the retaining ring is located on the outside of the stator iron core and the extending end portion is mounted with the separation preventing key for preventing the separation between the retaining ring and the rotor iron core. However, in this case, a problem arises in that a weight of the rotor iron core increases due to an increase in axial length of the rotor itself and a weight of the rotor coil increases due to an increase in axial length of the rotor coil.

An object of the invention is to provide a rotary electric machine capable of ensuring a cooling air flow between a rotor iron core and a stator iron core without enlarging a rotor.

In order to achieve the above-described Object, a rotary electric machine according to claim 1,2 or 14 is provided. Preferred embodiments of the invention are characterized in the sub-claims.

As described above, first, since the separation preventing device is provided between the rotor iron core and the retaining ring at the shrink-fitting position where the retaining ring is shrink-fitted to the rotor iron core, the retaining ring needs not to extend to the center portion of the rotor iron core in an axial direction, thereby reducing a length of the retaining ring itself. Accordingly, since it is possible to prevent the retaining ring from being adjacent to the end portion of the stator iron core, a gap between the rotor iron core and the stator iron core does not reduce. As a result, it is possible to ensure a cooling air flow between the rotor iron core and the stator iron core without enlarging the rotor.

Further, since the separation preventing device is provided at a position between the adjacent slots so as to be opposed to each other at the shrink-fitting position, the separation preventing device does not engage with the slot, thereby preventing the separation preventing device from interfering with the rotor coil in the slot or the insulating layer or the earth insulating layer between the rotor coils.

Other objects, features and advantages of the invention will become apparent from the following description of the embodiments of the invention taken in conjunction with the accompanying drawings.

### Brief Description of the Several Views of the Drawing

Fig. 1 is a vertical sectional view schematically showing a part of a turbine generator as a rotary electric machine according to a first embodiment of the invention.
Fig. 2 is an enlarged view showing a rotor shown in Fig. 1.
Fig. 3 is a cross-sectional view taken along the line III-III shown in Fig. 2.
Fig. 4 is a cross-sectional view taken along the line IV-IV shown in Fig. 2.
Fig. 5 is a cross-sectional perspective view showing a retaining ring shown in Fig. 1.
Fig. 6 is an exploded perspective view showing the rotor shown in Fig. 2.
Fig. 7 is a cross-sectional view showing a rotary electric machine according to a second embodiment of the invention, corresponding to that in Fig. 4.
Fig. 8 is an exploded perspective view showing the rotary electric machine corresponding to that shown in Fig. 6.
Fig. 9 is a cross-sectional view showing a rotary electric machine according to a third embodiment of the invention corresponding to that in Fig. 4.
Fig. 10 is an enlarged perspective view showing a key used in Fig. 9.
Fig. 11 is a cross-sectional view showing a rotary electric machine according to a fourth embodiment of the invention corresponding to that in Fig. 4.
Fig. 12 is a cross-sectional perspective view showing a retaining ring used in Fig. 11 corresponding to that in Fig. 5.
Fig. 13 is a cross-sectional view showing a rotary electric machine according to a fifth embodiment of the invention corresponding to that in Fig. 4.

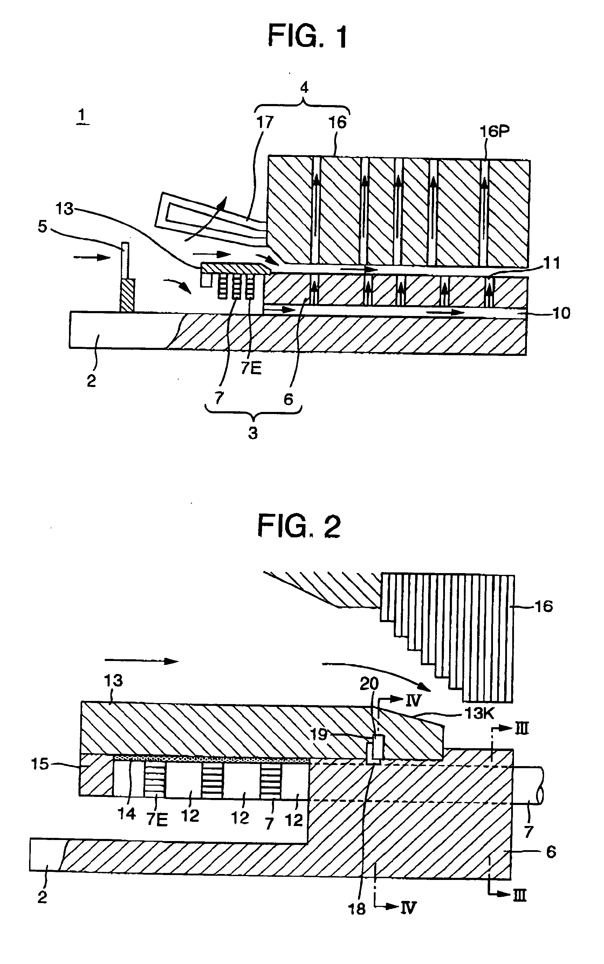

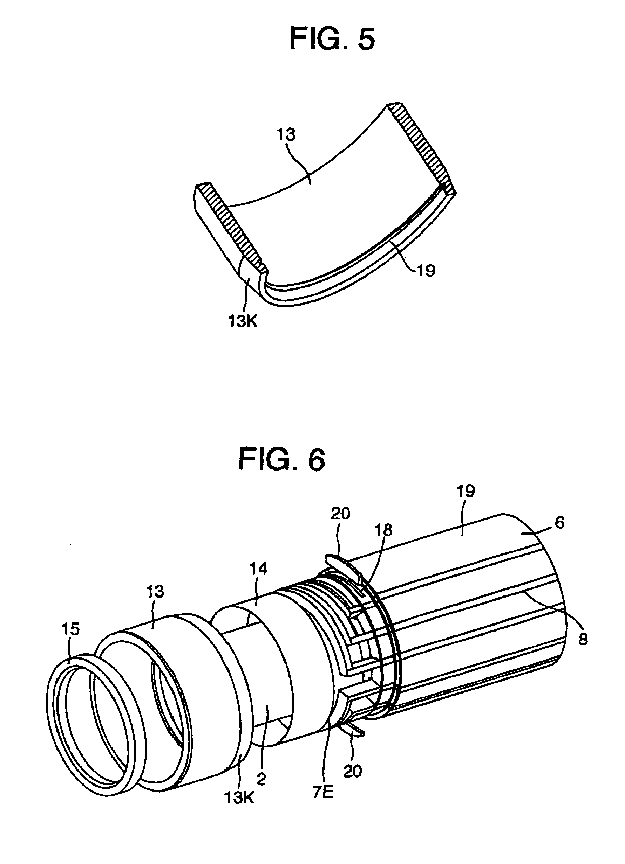

Hereinafter, a turbine generator according to a first embodiment of the invention will be described with reference to Figs. 1 to 6.

A turbine generator 1 mainly includes a rotor 3 provided in a rotary shaft 2, a stator 4 provided in the rotor 3 with a gap interposed therebetween, a blowing fan 5 blowing refrigerant for cooling the rotor 3 and the stator 4, a bearing (not shown) supporting the rotary shaft 2, and a stator frame (not shown) supporting the stator 4.

The rotor 3 includes a rotor iron core 6 configured as a lump-shape iron core and a rotor coil 7 mounted to the rotor iron core 6. The rotor iron core 6 is integrally formed with the rotary shaft 2 by casting or integrally fixed to the rotary shaft 2 by the use of a fixing member.

The rotor iron core 6 is configured such that a plurality of slots 8 is circumferentially provided in an axial direction and a rotor magnetic pole 9 is provided between slot groups each having the plurality of slots 8 adjacent to each other. The rotor iron core 6 is provided with an axial cooling passageway 10 and a radial cooling passageway (radial cooling duct) 11 formed from the axial cooling passageway 10 in a penetrating manner in an outer radial direction.

The rotor coil 7 is wound around an electric conductor (not shown) and is configured by laminating an insulating layer and the conductor. The rotor coil 7 with such a configuration is mounted to each slot 8 with an earth insulating layer (not shown) interposed therebetween and is fixed thereto by blocking an opening of the slot 8 by the use of a wedge. Then, a rotor coil end portion 7E in which the rotor coil 7 protrudes from both end portions of the slot 8 of the rotor iron core 6 in an axial direction is held at the same insulation interval with a spacer 12 interposed between the rotor coil end portions 7E.

The outer periphery of the rotor coil end portion 7E is retained by a retaining ring 13 with an insulating member 14 interposed therebetween so that the rotor coil end portion 7E protruding from the axial end portion of the rotor iron core 6 is not deformed in an outer radial direction due to a centrifugal force at high speed rotation.

The retaining ring 13 is fixed to the axial end portion of the rotor iron core 6 by shrink-fitting. As shown in detail in Fig. 2, the outer-diameter of the rotor iron core 6 at the shrink-fitting position is smaller than that of the rotor iron core 6, and one end portion of the retaining ring 13 is shrink-fitted to the small-diameter portion. The outer periphery of the shrink-fitting portion of the retaining ring 13 is provided with an inclined portion 13K. Then, the inner-diameter side of the other end portion of the retaining ring 13 is provided with a retaining ring supporting member 15.

Meanwhile, the stator 4 includes a stator iron core 16 in which silicon steel is laminated in an axial direction and a stator coil 17 mounted to the stator iron core 16. Then, the stator iron core 16 is provided with a radial cooling passageway (radial cooling duct) 16P.

In the turbine generator 1 with such a configuration, in a case where a temperature increases due to a heat of the' respective parts generated during an operation, in order to cool the generated heat, refrigerant of the blowing fan 5 is branched as follows. First, the refrigerant is supplied to the axial cooling passageway 10 via the inner-diameter side of the rotor coil end portion 7E. Second, the refrigerant is supplied to a gap between the rotor iron core 6 and the stator iron core 16 via a gap between the retaining ring 13 and the end portion of the stator coil 17. Third, the refrigerant is supplied to the end portion of the end portion of the stator coil 17. Likewise, since the refrigerant flows to the three cooling passageways, it is possible to cool the rotor 3 and the stator 4.

Among the three cooling passageways, in the second cooling passageway, since the retaining ring 13 is shrink-fitted to the small-diameter portion of the rotor iron core 6, the axial length of the retaining ring 13 is shortened. As a result, it is possible to widen a gap between the end portion of the rotor iron core 6 and the retaining ring 13 and thus to ensure a sufficient flow volume of the refrigerant.

Incidentally, a separation preventing device for preventing a separation of the retaining ring 13 is provided in the small-diameter portion (shrink-fitting position) formed at the axial end portion of the rotor iron core 6. Specifically, the separation preventing device includes a first key groove 18 provided in the small-diameter portion (shrink-fitting position) of the rotor magnetic pole 9 provided between the slot groups of the rotor iron core 6 so as to be opposed to each other, a second key groove 19 provided at the inner-peripheral surface of the retaining ring 13 corresponding to the shrink-fitting position, and a key 20 disposed in the two key grooves 18 and 19. Incidentally, the key 20 has a curve portion having the same curvature as that of the second key groove 19. Additionally, the first key groove 18 has a depth in which the top of the curve portion of the key 20 does not protrude more than the outer diameter of the small-diameter portion upon shrink-fitting the retaining ring 13. For this reason, upon shrink-fitting the retaining ring 13, the key 20 is received in the first key groove 18 so as not to protrude more than the outer diameter of the small-diameter portion of the rotor iron core. Then, in this state, the retaining ring 13 is shrink-fitted to the small-diameter portion, and the axial positions of the first key groove 18 and the second key groove 19 are adjusted to be identical with each other.

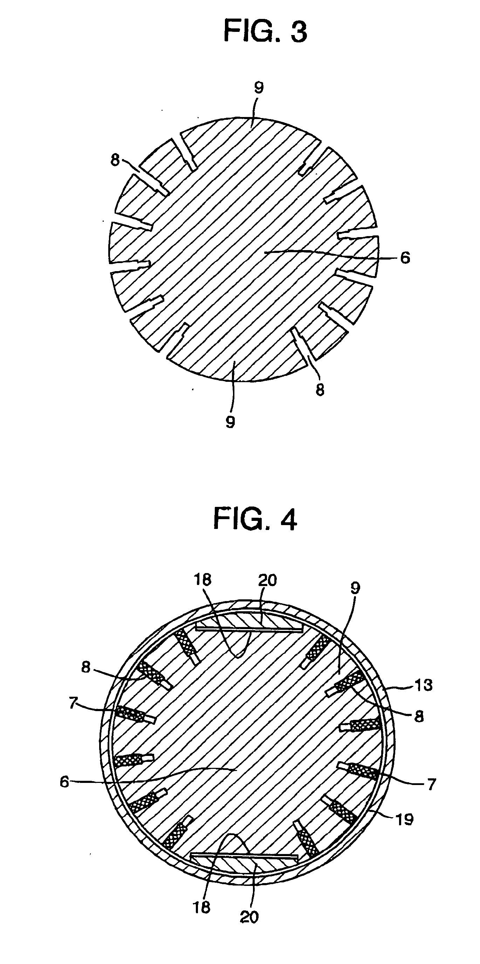

In the separation preventing device with such a configuration, as shown in Fig. 4, the key 20 disposed in the first key groove 18 moves to the second key groove 19 of the retaining ring 13 due to a centrifugal force during an operation of the turbine generator 1. Then, the key 20 is disposed in both key grooves 18 and 19, thereby exhibiting a separation preventing function. Additionally, since the first key groove 18 is provided at a position corresponding to the rotor magnetic pole 9 avoiding the slot 8 in which the rotor coil 7 is received, it is possible to prevent various problems caused when the key 20 and the first key groove 18 interfere with the rotor coil 7.

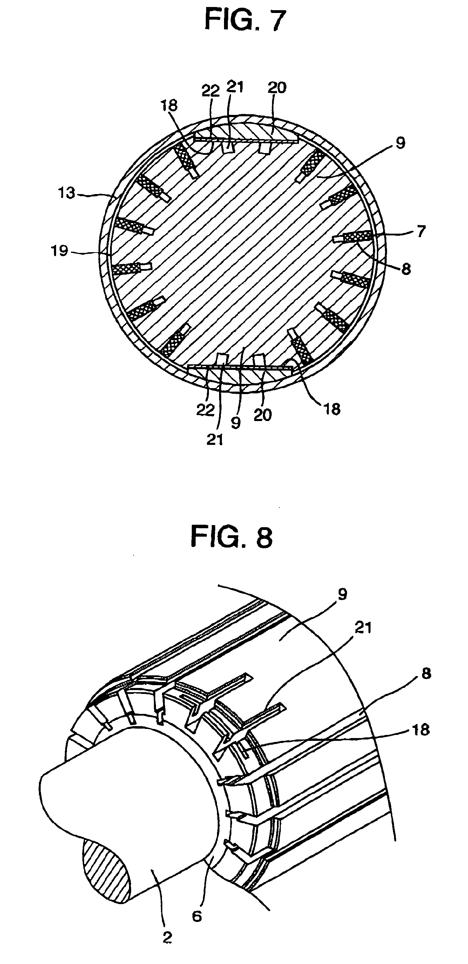

Next, a second embodiment according to the invention will be described with reference to Figs. 7 and 8. Additionally, the same reference numerals are given to the same components shown in Figs. 1 to 6, and the repetitive description thereof will be omitted.

The present embodiment is different from the first embodiment in that a cooling slot 21 is provided from the small-diameter portion at the shrink-fitting position of the stator iron core 6 toward the center in an axial direction. Also, the retaining ring 13 is shrink-fitted with the key 20 received in the first key groove 18, and then the key 20 is moved to the second key groove 19 of the retaining ring 13 by the use of the cooling slot 21, and, a fixed key 22 is inserted between the key 20 and a bottom of the first key groove 18 for the purpose of a fixing operation.

Likewise, when the key 20 is fixed by the fixed key 22 as a fixing member, it is possible to exhibit the same advantage as that of the first embodiment and to reliably dispose the key 20 in the first key groove 18 and the second key groove 19. As a result, it is possible to improve reliability of the separation preventing function.

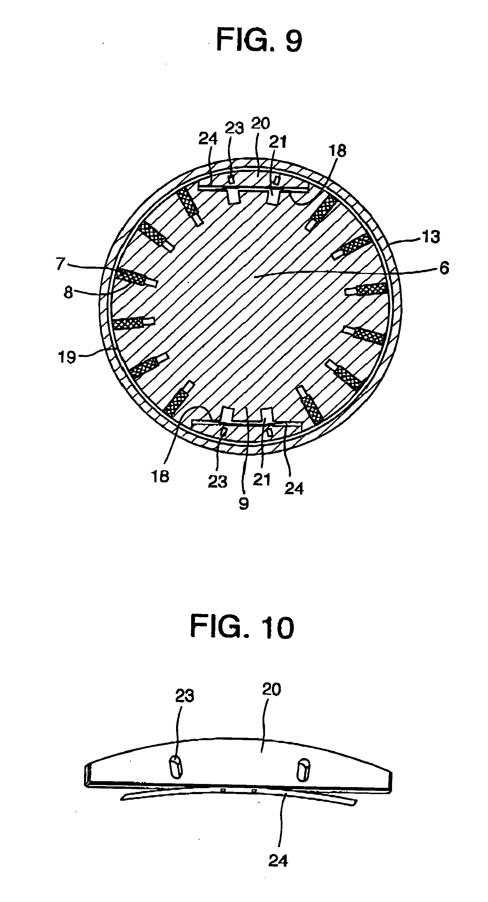

A third embodiment according to the invention will be described with reference to Figs. 9 and 10. Additionally, the same reference numerals are given to the same components shown in Figs. 1 to 6, and the repetitive description thereof will be omitted.

The present embodiment basically has the same configuration as that of the second embodiment, but different from the second embodiment in that the key 20 is provided with a ventilating hole 23 communicating with the cooling slot 21 and an elastic plate spring 24 as a fixing member of the key 20 is fixed to a portion of the key 20 corresponding to the bottom of the first key groove 18 by the use of, for example, general methods such as welding or screw-fixing.

According to the present embodiment, it is possible to exhibit the same advantage as that of the first embodiment. Also, since the retaining ring 13 is shrink-fitted to the small-diameter portion of the rotor iron core 6, and then the key 20 is received in the second groove 19 of the retaining ring 13 while being pressed by the plate spring 24, it is possible to position the key 20 in the first key groove 18 and the second key groove 19 astride all the time and thus to exhibit the reliable separation preventing function. Also, since the key 20 is provided with the ventilating hole 23 communicating with the cooling slot 21, it is possible to improve the flow of the refrigerant and thus to improve the cooling advantage of the rotor iron core. Additionally, when a bar-shape tool is inserted from the opening on the outer periphery side of the cooling slot 21 of the rotor iron core into the ventilating hole 23 of the key 20, and makes the key 20 move in a direction compressing the plate spring 24, it is possible to attach or detach the retaining ring 13 to or from the rotor iron core 6 with the key 20 received in the bottom of the first key groove 18.

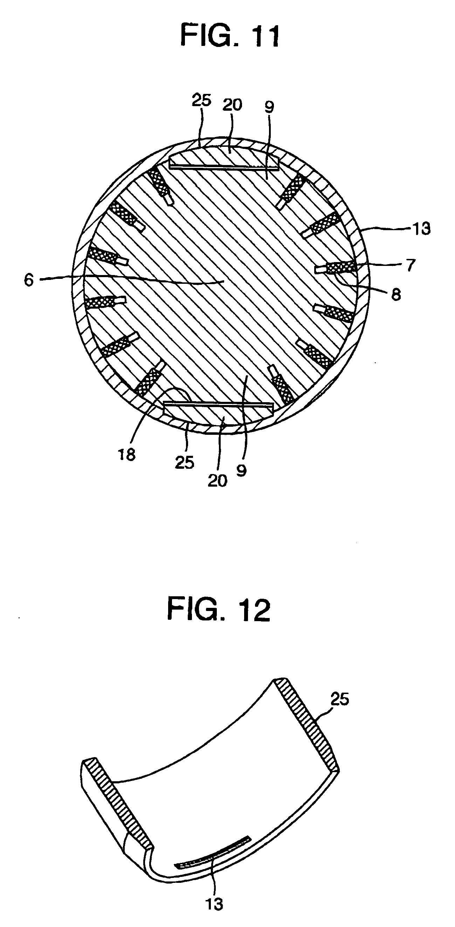

A fourth embodiment according to the invention will be described with reference to Figs. 11 and 12. The same reference numerals are given to the same components shown in Figs. 1 to 6, and the repetitive description thereof will be omitted.

The present embodiment basically has the same configuration as that of the first embodiment, but different from the first embodiment having a configuration in which the second key groove 19 formed in the inner-peripheral surface of the retaining ring 13 is a continuous groove, in that a second key groove 25 is a discontinuous groove. That is, the second key groove 25 has a minimum circumferential length in which the key 20 is received and manufactured, and is provided in the inner-peripheral surface of the retaining ring 13 corresponding to the rotor magnetic pole 9 of the rotor iron core 6.

According to the present embodiment, it is possible to exhibit the same advantage as that of the first embodiment. Also, since the second key groove 25 is configured as the discontinuous groove, it is possible to prevent a positional deviation of the retaining ring 13 in a circumferential direction, which may be generated during the operation of the turbine generator, by the use of a contact friction force obtained by the shrink-fitting operation of the retaining ring 13 and the engagement between the key 20 and the second key groove 25 as the discontinuous groove.

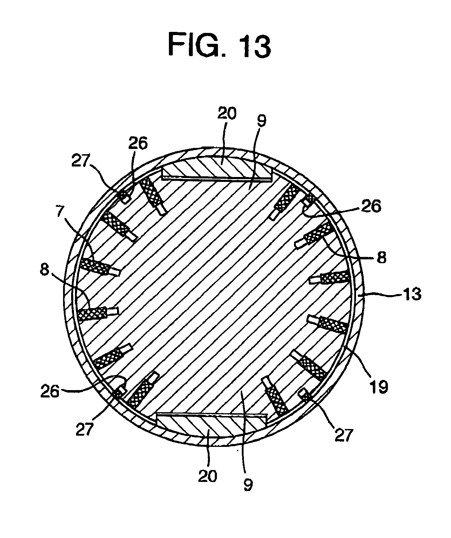

A fifth embodiment according to the invention will be described with reference to Fig. 13. The same reference numerals are given to the same components shown in Figs. 1 to 6, and the repetitive description thereof will be omitted. The present embodiment has the same configuration as that of the first embodiment.

The present embodiment is different from the configuration shown in Fig. 4 of the first embodiment in that a third key groove 26 is provided between the slots 8 adjacent to the rotor magnetic pole 9 of the rotor iron core 6, and a second key 27 is provided to be disposed astride in the third key groove 26 and the second key groove 19 of the retaining ring 13.

According to the present embodiment, it is possible to exhibit the same advantage as that of the first embodiment. Also, since the retaining ring 13 engages with the key 20 provided at a position corresponding to the rotor magnetic pole 9 and the second key 27 provided between the adjacent slots 8, it is possible to more reliably prevent the retaining ring 13 from being separated from the end portion of the rotor iron core 6.

Further, in consideration of capacity or type of the turbine generator, the second key 27 may be provided between the adjacent slots 8 without the key 20 provided at a position corresponding to the rotor magnetic pole 9. Furthermore, in a case where the second key 27 is provided only at a position between the adjacent slots 8, the second key 27 may be provided between the adjacent slots 8 at other positions as well as between the adjacent slots 8 at the position adjacent to the rotor magnetic pole 9.

While the above-described embodiments have described the turbine generator as the rotary electric machine, the invention is not limited to the turbine generator, but may be applied to the rotary electric machine having a configuration in which the cylindrical retaining ring is shrink-fitted to both end portions of the rotor iron core so as to retain the rotor coil end portion even when a centrifugal force is generated.

It should be further understood by those skilled in the art that although the foregoing description has been made on embodiments of the invention, the invention is not limited thereto and various changes and modifications may be made without departing from the scope of the appended claims.

## Claims

1. A rotary electric machine comprising:
a rotor including: a rotor iron core in which a plurality of slots is circumferentially provided in an axial direction; a rotor coil mounted to each slot of the rotor iron core; a retaining ring mounted to both longitudinal end portions of the rotor iron core so as to retain a rotor coil end portion protruding from an end portion of the rotor iron core even when a centrifugal force is generated; and a separation preventing device provided between said retaining ring and the rotor iron core so as to prevent a separation of said retaining ring,
wherein said separation preventing device is provided at a position between the adjacent slots so as to correspond to each other at a shrink-fitting position where the retaining ring is shrink-fitted to the rotor iron core.

2. A rotary electric machine comprising:
a rotor including: a rotor iron core in which a plurality of slots is circumferentially provided in an axial direction; a rotor coil mounted to each slot of the rotor iron core; a retaining ring mounted to both longitudinal end portions of the rotor iron core so as to retain a rotor coil end portion protruding from an end portion of the rotor iron core even when a centrifugal force is generated; and a separation preventing device provided between said retaining ring and the rotor iron core so as to prevent a separation of said retaining ring,
wherein a small-diameter portion is provided in both longitudinal end portions of the rotor iron core, and
wherein the retaining ring is shrink-fitted to the small-diameter portion and the separation preventing device is provided at a position between the adjacent slots so as to correspond to each other at the small-diameter portion of the rotor iron core.

3. The rotary electric machine according to Claim 1, wherein said separation preventing device is provided at a plurality of positions in a circumferential direction.

4. The rotary electric machine according to Claim 1, wherein said separation preventing device is provided at a position corresponding to the rotor magnetic pole.

5. The rotary electric machine according to Claim 1, wherein said separation preventing device is provided at a position between the slots located between rotor magnetic poles so as to correspond to each other.

6. The rotary electric machine according to Claim 1, wherein said separation preventing device is provided at a position corresponding to rotor magnetic poles and is provided at a position between the slots located between the rotor magnetic poles so as to be correspond to each other.

7. The rotary electric machine according to Claim 1, wherein said separation preventing device includes a key groove provided between adjacent slots of the rotor iron core, a key groove provided on the inner periphery side of the retaining ring, and a key engaging with both key grooves.

8. The rotary electric machine according to Claim 7, wherein a depth of the key groove of the rotor iron core is not less than a height of the key.

9. The rotary electric machine according to Claim 7, wherein the key groove provided in the inner periphery of the retaining ring is continuous in a circumferential direction.

10. The rotary electric machine according to Claim 7, wherein the key groove provided in the inner periphery of the retaining ring is discontinuous in a circumferential direction.

11. The rotary electric machine according to Claim 7, wherein the key groove of the rotor iron core is provided with a fixing member pressing the key toward the key groove of the retaining ring.

12. The rotary electric machine according to Claim 11, wherein the fixing member is configured as an elastic member.

13. The rotary electric machine according to Claim 12, wherein the elastic member is a plate spring.

14. A rotary electric machine comprising:
a rotor including: a lump-shape rotor iron core in which a plurality of slots is circumferentially provided in an axial direction; a rotor coil mounted to each of the plurality of slots of the lump-shape rotor iron core; a retaining ring mounted to both longitudinal end portions of the lump-shape rotor iron core so as to retain a rotor coil end portion protruding from an end portion of the lump-shape rotor iron core even when a centrifugal force is generated; and a separation preventing device provided between said retaining ring and the lump-shape rotor iron core so as to prevent a separation of said retaining ring,
wherein a small-diameter portion is provided in both longitudinal end portions of the lump-shape rotor iron core and said retaining ring is shrink-fitted to the small-diameter portion,
wherein said separation preventing device includes a first key groove provided in the outer periphery of the small-diameter portion so as to correspond to a rotor magnetic pole of the lump-shape rotor iron core, a second key groove provided in the inner periphery of said retaining ring, and a key engaging with both key grooves,
wherein a cooling slot is provided from an end portion of the small-diameter portion corresponding to the rotor magnetic pole of the lump-shape rotor iron core toward a center portion of the lump-shape rotor iron core in a longitudinal direction, and
wherein a ventilating hole is provided in the key corresponding to the cooling slot.
